(19) Europäisches Patentamt
European Patent Office
Office européen des brevets

(11) **EP 3 958 558 A1**

(12) **EUROPEAN PATENT APPLICATION**
published in accordance with Art. 153(4) EPC

(43) Date of publication:
**23.02.2022 Bulletin 2022/08**

(21) Application number: **20810116.2**

(22) Date of filing: **17.05.2020**

(51) International Patent Classification (IPC):
*H04N 17/00* (2006.01)

(52) Cooperative Patent Classification (CPC):
**H04N 13/106; H04N 17/00; H04N 21/234;**
**H04N 21/44; H04N 21/81**

(86) International application number:
**PCT/CN2020/090724**

(87) International publication number:
**WO 2020/233536 (26.11.2020 Gazette 2020/48)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **17.05.2019 CN 201910416533**

(71) Applicant: **Huawei Technologies Co., Ltd.**
**Shenzhen, Guangdong 518129 (CN)**

(72) Inventors:
• **XIONG, Jie**
  **Shenzhen, Guangdong 518129 (CN)**
• **HUANG, Yihong**
  **Shenzhen, Guangdong 518129 (CN)**
• **CHEN, Guang**
  **Shenzhen, Guangdong 518129 (CN)**
• **CHEN, Jian**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **VR VIDEO QUALITY EVALUATION METHOD AND DEVICE**

(57) The present invention discloses a method for assessing quality of a VR video, including: obtaining a bit rate, a frame rate, resolution, and TI of a VR video, and determining a mean opinion score MOS of the VR video based on the bit rate, the frame rate, the resolution, and the TI of the VR video. The MOS of the VR video is used to represent quality of the VR video. The present invention further discloses an assessment apparatus. In the embodiments of the present invention, accuracy of an assessment result of a VR video can be improved.

An assessment apparatus obtains a bit rate, resolution, a frame rate, and TI of a VR video — S201

The assessment apparatus determines a MOS of the VR video based on the bit rate, the resolution, the frame rate, and the TI of the VR video — S202

FIG. 2

**Description**

**TECHNICAL FIELD**

The present invention relates to the field of video processing, and in particular, to a method and an apparatus for assessing quality of a VR video.

**BACKGROUND**

A virtual reality (virtual reality, VR) technology is a cutting-edge technology that combines a plurality of fields (including computer graphics, a man-machine interaction technology, a sensor technology, a man-machine interface technology, an artificial intelligence technology, and the like) and in which appropriate equipment is used to deceive human senses (for example, senses of three-dimensional vision, hearing, and smell) to create, experience, and interact with a world completely detached from reality. Briefly, the VR technology is a technology in which a computer is used to create a false world and create immersive and interactive audio-visual experience. With increasing popularity of VR services, VR industry ecology emerges. An operator, an industry partner, and an ordinary consumer all need a VR service quality assessment method to evaluate user experience. User experience is evaluated mainly by assessing quality of a VR video, to drive transformation of the VR service from available to user-friendly and facilitate development of the VR industry. In the conventional technology, quality of a video is assessed by using a bit rate, resolution, and a frame rate of the video. This is a method for assessing quality of a conventional video. However, the VR video greatly differs from the conventional video. The VR video is a 360-degree panoramic video, and the VR video is encoded in a unique manner. If the quality of the VR video is assessed by using the method for assessing quality of the conventional video, an assessment result is of low accuracy.

**SUMMARY**

Embodiments of the present invention provide a method and an apparatus for assessing quality of a VR video. In the embodiments of the present invention, accuracy of an assessment result of a VR video is improved.
According to a first aspect, an embodiment of the present invention provides a method for assessing quality of a VR video, including:
obtaining a bit rate, a frame rate, resolution, and temporal perceptual information (temporal perceptual information, TI) of a VR video, where the TI of the VR video is used to represent a time variation of a video sequence of the VR video; and determining a mean opinion score (mean opinion score) MOS of the VR video based on the bit rate, the frame rate, the resolution, and the TI of the VR video, where the MOS of the VR video is used to represent quality of the VR video. In comparison with the conventional technology, the TI is introduced as a parameter for assessing the quality of the VR video, and therefore accuracy of a quality assessment result of the VR video is improved.
In a feasible embodiment, the obtaining TI of a VR video includes:
obtaining a difference between pixel values at a same location in two adjacent frames of images of the VR video; and calculating the difference between the pixel values at the same location in the two adjacent frames of images based on standard deviation formulas, to obtain the TI of the VR video.

$$TI = \sqrt{\sum_{i=1,j=1}^{i=W,j=H}(p_{ij} - p)^2 /(W * H)} \qquad p = \sum_{i=1,j=1}^{i=W,j=H} p_{ij} /(W * H)$$

The standard deviation formulas are , and , where

$p_{ij}$ represents a difference between a pixel value of a $j^{th}$ pixel in an $i^{th}$ row of a current frame in the two adjacent frames of images and a pixel value of a $j^{th}$ pixel in an $i^{th}$ row of a previous frame of the current frame, and
W and H respectively represent a width and a height of each of the two adjacent frames of images.

In a feasible embodiment, the obtaining TI of a VR video includes:
obtaining a head rotation angle $\Delta a$ of a user within preset duration $\Delta t$; determining an average head rotation angle of the user based on the preset duration $\Delta t$ and the head rotation angle $\Delta a$ of the user; and determining the TI of the VR video based on the average head rotation angle of the user. A larger average head rotation angle of the user indicates a larger TI value of the VR video.
In a feasible embodiment, the obtaining a head rotation angle $\Delta a$ of a user within preset duration $\Delta t$ includes:
obtaining a head angle $y_t$ of the user at a time point $t$ and a head angle $y_{t+\Delta t}$ of the user at a time point $t + \Delta t$; and

determining the head rotation angle $\Delta a$ of the user according to the following method: When an absolute value of a difference between $y_{t+\Delta t}$ and $y_t$ is greater than 180 degrees, and $y_t$ is less than $y_{t+\Delta t}$,

$$\Delta a = 180 - abs(y_t) + 180 - abs(y_{t+\Delta t});$$

when the absolute value of the difference between $y_{t+\Delta t}$ and $y_t$ is greater than 180 degrees, and $y_t$ is greater than $y_{t+\Delta t}$,

$$\Delta a = (180 - abs(y_t) + 180 - abs(y_{t+\Delta t})) - 1;$$

and when the absolute value of the difference between $y_{t+\Delta t}$ and $y_t$ is not greater than 180 degrees, $\Delta a = y_{t+\Delta t}-y_t$.

In a feasible embodiment, the determining the TI of the VR video based on the average head rotation angle of the user includes:

inputting the average head rotation angle of the user into a first TI prediction model for calculation, to obtain the TI of the VR video. The first TI prediction model is $TI$=log($m$*$angleVelocity$)+$n$, where $angleVelocity$ represents the average head rotation angle of the user, and m and n are constants. The TI of the VR video is predicted based on the head rotation angle of the user, so that computing power required for calculating the TI can be ignored.

In a feasible embodiment, the determining the TI of the VR video based on the average head rotation angle of the user includes:

inputting the average head rotation angle of the user into a second TI prediction model for calculation, to obtain the TI of the VR video. The second TI prediction model is a nonparametric model. The TI of the VR video is predicted based on the head rotation angle of the user, so that computing power required for calculating the TI can be ignored.

In a feasible embodiment, the determining a mean opinion score MOS of the VR video based on the bit rate, the frame rate, the resolution, and the TI of the VR video includes:

inputting the bit rate, the resolution, the frame rate, and the TI of the VR video into a quality assessment model for calculation, to obtain the MOS of the VR video. The quality assessment model is as follows:
$MOS$=5-$a$*log(max(log($B1$),0.01))-$b$*log(max(log($B2$),0.01))-$c$*log(max(log$F$,0.01))- $d$*log(max(log($TI$),0.01)), where B1 represents the bit rate of the VR video, B2 represents the resolution of the VR video, F represents the frame rate of the VR video, and a, b, c, and d are constants.

According to a second aspect, an embodiment of the present invention provides an assessment apparatus, including:

an obtaining unit, configured to obtain a bit rate, a frame rate, resolution, and temporal perceptual information TI of a VR video, where the TI of the VR video is used to represent a time variation of a video sequence of the VR video; and
a determining unit, configured to determine a mean opinion score MOS of the VR video based on the bit rate, the frame rate, the resolution, and the TI of the VR video, where the MOS of the VR video is used to represent quality of the VR video.

In a feasible embodiment, when obtaining the TI of the VR video, the obtaining unit is specifically configured to: obtain a difference between pixel values at a same location in two adjacent frames of images of the VR video; and calculate the difference between the pixel values at the same location in the two adjacent frames of images based on standard deviation formulas, to obtain the TI of the VR video.

The standard deviation formulas are
$$TI = \sqrt{\sum_{i=1,j=1}^{i=W,j=H}(p_{ij} - p)^2 /(W*H)}$$
, and
$$p = \sum_{i=1,j=1}^{i=W,j=H} p_{ij} /(W*H)$$
, where

$p_{ij}$ represents a difference between a pixel value of a $j^{th}$ pixel in an $i^{th}$ row of a current frame in the two adjacent frames of images and a pixel value of a $j^{th}$ pixel in an $i^{th}$ row of a previous frame of the current frame, and
W and H respectively represent a width and a height of each of the two adjacent frames of images.

In a feasible embodiment, when obtaining the TI of the VR video, the obtaining unit is specifically configured to: obtain a head rotation angle $\Delta a$ of a user within preset duration $\Delta t$; determine an average head rotation angle of the user based on the preset duration $\Delta t$ and the head rotation angle $\Delta a$ of the user; and determine the TI of the VR video based on the average head rotation angle of the user. A larger average head rotation angle of the user indicates a larger TI value of the VR video.

In a feasible embodiment, when obtaining the head rotation angle $\Delta a$ of the user within the preset duration $\Delta t$, the obtaining unit is specifically configured to:

obtain a head angle $y_t$ of the user at a time point $t$ and a head angle $y_{t+\Delta t}$ of the user at a time point $t + \Delta t$; and determine the head rotation angle $\Delta a$ of the user according to the following method: When an absolute value of a difference between $y_{t+\Delta t}$ and $y_t$ is greater than 180 degrees, and $y_t$ is less than $y_{t+\Delta t}$,

$$\Delta a = 180 - abs(y_t) + 180 - abs(y_{t+\Delta t}) ;$$

when the absolute value of the difference between $y_{t+\Delta t}$ and $y_t$ is greater than 180 degrees, and $y_t$ is greater than $y_{t+\Delta t}$,

$$\Delta a = (180 - abs(y_t) + 180 - abs(y_{t+\Delta t})) - 1 ;$$

and when the absolute value of the difference between $y_{t+\Delta t}$ and $y_t$ is not greater than 180 degrees, $\Delta a = y_{t+\Delta t} - y_t$.

In a feasible embodiment, when determining the TI of the VR video based on the average head rotation angle of the user, the obtaining unit is specifically configured to:

input the average head rotation angle of the user into a first TI prediction model for calculation, to obtain the TI of the VR video. The first TI prediction model is $TI=\log(m*angleVelocity)+n$, where $angleVelocity$ represents the average head rotation angle of the user, and m and n are constants.

In a feasible embodiment, when determining the TI of the VR video based on the average head rotation angle of the user, the obtaining unit is specifically configured to:

input the average head rotation angle of the user into a second TI prediction model for calculation, to obtain the TI of the VR video. The second TI prediction model is a nonparametric model.

In a feasible embodiment, when determining the mean opinion score MOS of the VR video based on the bit rate, the frame rate, the resolution, and the TI of the VR video, the determining unit is specifically configured to:

input the bit rate, the resolution, the frame rate, and the TI of the VR video into a quality assessment model for calculation, to obtain the MOS of the VR video. The quality assessment model is as follows:

$MOS=5-a*\log(\max(\log(B1),0.01))-b*\log(\max(\log(B2),0.01))-c*\log(\max(\log F,0.01))-d*\log(\max(\log(TI),0.01))$, where B1 represents the bit rate of the VR video, B2 represents the resolution of the VR video, F represents the frame rate of the VR video, and a, b, c, and d are constants.

According to a third aspect, an embodiment of the present invention provides an assessment apparatus, including:

a memory that stores executable program code; and a processor coupled to the memory.

The processor invokes the executable program code stored in the memory to perform some or all of the steps in the method according to the first aspect.

According to a fourth aspect, an embodiment of the present invention provides a computer-readable storage medium. The computer storage medium stores a computer program, the computer program includes program instructions, and when the program instructions are executed by a processor, the processor is enabled to perform some or all of the steps in the method according to the first aspect.

It may be learned that in the solutions of the embodiments of the present invention, the bit rate, the frame rate, the resolution, and the TI of the VR video are obtained, and the mean opinion score MOS of the VR video is determined based on the bit rate, the frame rate, the resolution, and the TI of the VR video, where the MOS of the VR video is used to represent quality of the VR video. In the embodiments of the present invention, accuracy of an assessment result of the VR video can be improved.

These aspects or other aspects of the present invention are clearer and more comprehensible in description of the following embodiments.

## BRIEF DESCRIPTION OF DRAWINGS

To describe the technical solutions in the embodiments of the present invention or in the conventional technology more clearly, the following briefly describes the accompanying drawings for describing the embodiments or the conventional technology. It is clear that the accompanying drawings in the following description show merely some embodiments of the present invention, and a person of ordinary skill in the art may derive other drawings from these accompanying drawings without creative efforts.

FIG. 1 is a schematic diagram of a quality assessment scenario of a VR video according to an embodiment of the present invention;
FIG. 2 is a schematic flowchart of a method for assessing quality of a VR video according to an embodiment of the present invention;
FIG. 3 is a schematic structural diagram of an assessment apparatus according to an embodiment of the present invention; and
FIG. 4 is a schematic structural diagram of another assessment apparatus according to an embodiment of the present invention.

**DESCRIPTION OF EMBODIMENTS**

Detailed description is separately provided below.

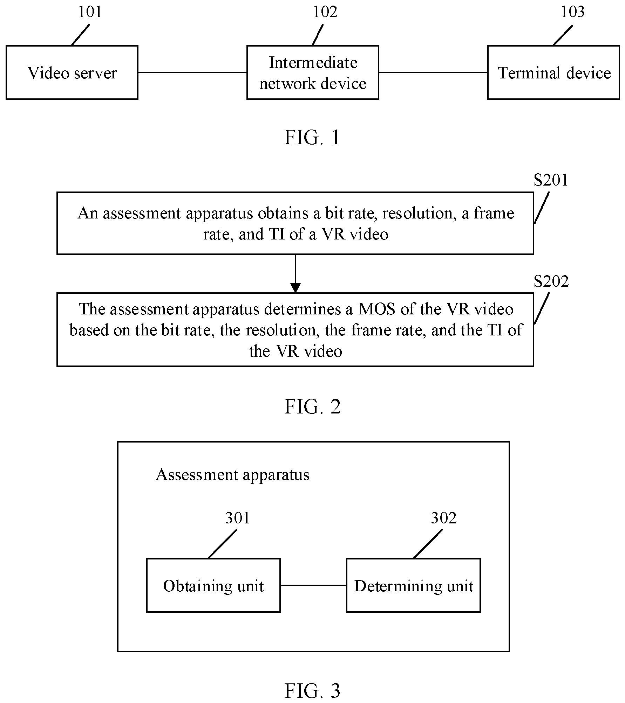

FIG. 1 is a schematic diagram of a quality assessment scenario of a VR video according to an embodiment of the present invention. As shown in FIG. 1, the scenario includes a video server 101, an intermediate network device 102, and a terminal device 103.

The video server 101 is a server that provides a video service, for example, an operator.

The intermediate network device 102 is a device for implementing video transmission between the video server 101 and the terminal device 103, for example, a home gateway. The home gateway not only functions as a hub for connecting the inside and outside, but also serves as a most important control center in an entire home network. The home gateway provides a high-speed access interface on a network side for accessing a wide area network. The home gateway provides an Ethernet interface and/or a wireless local area network function on a user side for connecting various service terminals in a home, for example, a personal computer and an IP set-top box. The terminal device 103 is also referred to as user equipment (User Equipment, UE), and is a device that provides voice and/or data connectivity for a user, for example, a mobile phone, a tablet computer, a notebook computer, a palmtop computer, a mobile internet device (mobile internet device, MID), or a wearable device such as a head-mounted device.

In the present invention, any one of the video server 101, the intermediate network device 102, and the terminal device 103 may perform a method for assessing quality of a VR video according to the present invention.

FIG. 2 is a schematic flowchart of a method for assessing quality of a VR video according to an embodiment of the present invention. As shown in FIG. 2, the method includes the following steps. S201. An assessment apparatus obtains a bit rate, resolution, a frame rate, and TI of a VR video.

The bit rate of the VR video is a rate at which a bitstream of the VR video is transmitted per unit of time, the resolution of the VR video is resolution of each frame of image of the VR video, and the frame rate of the VR video is a quantity of frames of refreshed images per unit of time. The TI of the VR video is used to indicate a time variation of a video sequence of the VR video. A larger time variation of a video sequence indicates a larger TI value of the video sequence. A video sequence with a relatively high degree of motion usually has a relatively large time variation, and therefore the video sequence usually has a relatively large TI value.

In a feasible embodiment, the assessment apparatus calculates the bitstream of the VR video by obtaining load of the bitstream of the VR video in a period of time. The assessment apparatus parses the bitstream of the VR video to obtain a sequence parameter set (sequence parameter set, SPS) and a picture parameter set (picture parameter set, PPS) of the VR video, and then determines the resolution and the frame rate of the VR video based on syntax elements in the SPS and the PPS. In a feasible embodiment, that an assessment apparatus obtains TI of a VR video includes:

determining the TI of the VR video in a manner in ITU-R BT. 1788, that is, determining the TI of the VR video based on pixel values of two adjacent frames of images of the VR video; or
determining the TI of the VR video based on head rotation angle information of a user.

Specifically, that the assessment apparatus determines the TI of the VR video based on pixel values of two adjacent frames of images of the VR video includes:
The assessment apparatus obtains a difference between pixel values of pixels at a same location in the two adjacent frames of images; and calculates the difference between the pixel values of the pixels at the same location in the two adjacent frames of images based on standard deviation formulas, to obtain the TI of the VR video.

$$TI = \sqrt{\sum_{i=1,j=1}^{i=W,j=H}(p_{ij}-p)^2/(W*H)} \qquad p = \sum_{i=1,j=1}^{i=W,j=H}p_{ij}/(W*H)$$

The standard deviation formulas are , and
where

$p_{ij}$ represents a difference between a pixel value of a $j^{th}$ pixel in an $i^{th}$ row of a current frame in the two adjacent frames of images and a pixel value of a $j^{th}$ pixel in an $i^{th}$ row of a previous frame of the current frame, and
W and H respectively represent a width and a height of each of the two adjacent frames of images. In other words, W*H is resolution of each of the two adjacent frames of images.

In an example, if the assessment apparatus determines the TI of the VR video based on pixel values of pixels in N consecutive frames of images of the VR video, the assessment apparatus obtains N-1 pieces of candidate TI based on related description of the process of determining the TI of the VR video based on pixel values of two adjacent frames of images, and then determines an average value of the N-1 pieces of candidate TI as the TI of the VR video, where N is an integer greater than 2.

In a feasible embodiment, that the assessment apparatus determines the TI of the VR video based on head rotation angle information of a user includes:

obtaining a head rotation angle $\Delta a$ of the user within preset duration $\Delta t$;
determining an average head rotation angle of the user based on the preset duration $\Delta t$ and the head rotation angle $\Delta a$ of the user; and
determining the TI of the VR video based on the average head rotation angle of the user.

Specifically, that the assessment apparatus obtains a head rotation angle $\Delta a$ of the user within preset duration $\Delta t$ includes:
obtaining a head angle $y_t$ of the user at a time point $t$ and a head angle $y_{t+\Delta t}$ of the user at a time point $t + \Delta t$, and determining the head rotation angle $\Delta a$ of the user according to the following method:

When an absolute value of a difference between $y_{t+\Delta t}$ and $y_t$ is greater than 180 degrees, and $y_t$ is less than $y_{t+\Delta t}$,

$$\Delta a = 180 - abs(y_t) + 180 - abs(y_{t+\Delta t}) ;$$

when the absolute value of the difference between $y_{t+\Delta t}$ and $y_t$ is greater than 180 degrees, and $y_t$ is greater than $y_{t+\Delta t}$,

$$\Delta a = (180 - abs(y_t) + 180 - abs(y_{t+\Delta t})) - 1 ;$$

and when the absolute value of the difference between $y_{t+\Delta t}$ and $y_t$ is not greater than 180 degrees, $\Delta a = y_{t+\Delta t} - y_t$.

The assessment apparatus then determines the average head rotation angle *angleVelocity* of the user based on the preset duration $\Delta t$ and the head rotation angle $\Delta a$ of the user, where *angleVelocity*=$\Delta a/\Delta t$.

It should be noted that the preset duration may be duration of playing a frame of image of the VR video.

In a possible embodiment, that the assessment apparatus determines the TI of the VR video based on the average head rotation angle of the user includes:
The assessment apparatus inputs *angleVelocity* into a first TI prediction model for calculation, to obtain the TI of the VR video.

It should be noted that a larger value of *angleVelocity* indicates a larger TI value of the VR video.

Optionally, the TI prediction model is *TI*=log(*m\*angleVelocity*)+*n*, where m and n are constants.

Optionally, m and n may be empirically set, and value ranges of m and n may be [-100, 100]. Further, the value ranges of m and n may be specifically [-50, 50].

Optionally, m and n may alternatively be obtained through training, and m and n obtained through training are usually values in a range [-100, 100]. A process of obtaining m and n through training is a process of obtaining the TI prediction model through training.

In a feasible embodiment, before *angleVelocity* is input into the first TI prediction model for calculation, the assessment apparatus obtains a first training data set that includes a plurality of data items to train a first parametric model, to obtain the first TI prediction model. Each first data item in the first training data set includes an average head rotation angle and TI. The average head rotation angle is input data of the first parametric model, and the TI is output data of the first parametric model.

It should be noted that the first parametric model is a model described by using an algebraic equation, a differential equation, a differential equation system, a transfer function, and the like. Establishing the first parametric model is determining parameters in a known model structure, for example, m and n in the TI prediction model.

In an example, the assessment apparatus may train a training parametric model by using a training data set, to obtain a parameter in the model, for example, m and n in the TI prediction model.

In a feasible embodiment, that the assessment apparatus determines the TI of the VR video based on the average head rotation angle of the user includes:
inputting *angleVelocity* into a second TI prediction model for calculation, to obtain the TI of the VR video. The second TI prediction model is a nonparametric model.

Herein, it should be noted that in the nonparametric model, no strong assumptions are made about a form of an objective function. By making no assumptions, the objective function can be freely in any function form through learning from training data. A training step of the nonparametric model is similar to a training manner of a parametric model. A large quantity of training data sets need to be prepared to train the model. However, in the nonparametric model, no assumptions need to be made about the form of the objective function, which is different from a case, in the parametric model, in which an objective function needs to be determined. For example, a k-nearest neighbor (k-Nearest Neighbor, KNN) algorithm may be used.

It should be noted that the assessment apparatus in the present invention is connected to a head-mounted device (head mount display, HMD) of the user in a wired or wireless manner, so that the assessment apparatus can obtain the head angle information of the user.

S202. The assessment apparatus determines a MOS of the VR video based on the bit rate, the resolution, the frame rate, and the TI of the VR video.

The MOS of the VR video is used to represent quality of the VR video, and is an evaluation criterion for measuring video quality. A scoring criterion comes from ITU-T P.910. Video quality is classified into five levels: excellent, good, fair, poor, and very poor, and corresponding MOSs are 5, 4, 3, 2, and 1 respectively.

Specifically, the assessment apparatus inputs the bit rate, the resolution, the frame rate, and the TI of the VR video into a quality assessment model for calculation, to obtain the MOS of the VR video.

Optionally, the quality assessment model may be as follows:

$$MOS = 5 - a * \log(\max(\log(B1), 0.01)) - b * \log(\max(\log(B2), 0.01)) - c * \log(\max(\log F, 0.01)) -$$

$$d * \log(\max(\log(TI), 0.01)) \text{, where}$$

where B1 represents the bit rate of the VR video, B2 represents the resolution of the VR video, F represents the frame rate of the VR video, and a, b, c, and d are constants.

Optionally, a, b, c, and d may be empirically set, and value ranges of a, b, c, and d may be [-100, 100]. Further, the value ranges of a, b, c, and d may be specifically [-50, 50].

Optionally, a, b, c, and d may alternatively be obtained through training, and a, b, c, and d obtained through training are usually values in a range [-100, 100]. A process of obtaining a, b, c, and d through training is a process of obtaining the quality assessment model through training.

It should be noted that a higher bit rate of the VR video indicates a larger MOS value of the VR video, that is, indicates higher quality of the VR video. Higher resolution of the VR video indicates a larger MOS value of the VR video. A higher frame rate of the VR video indicates a larger MOS value of the VR video. A larger TI value of the VR video indicates a larger MOS value of the VR video.

In a feasible embodiment, before the bit rate, the resolution, the frame rate, and the TI of the VR video are input into the quality assessment model for calculation, the assessment apparatus obtains a third training data set that includes a plurality of data items to train a second parametric model, to obtain the quality assessment model. Each data item in the third training data set includes information about a VR video and a MOS. The information about the VR video is input data of the second parametric model, and TI is output data of the second parametric model. The information about the VR video includes a bit rate, resolution, and a frame rate of the VR video. It should be noted that the second parametric model is a model described by using an algebraic equation, a differential equation, a differential equation system, a transfer function, and the like. Establishing the second parametric model is determining parameters in a known model structure, for example, a, b, c, and d in the quality assessment model.

It may be learned that in the solution of this embodiment of the present invention, the assessment apparatus introduces the TI of the VR video to assess the quality of the VR video. In comparison with the conventional technology, accuracy of quality assessment of the VR video is significantly improved.

FIG. 3 is a schematic structural diagram of an assessment apparatus according to an embodiment of the present invention. As shown in FIG. 3, the assessment apparatus 300 includes:

an obtaining unit 301, configured to obtain a bit rate, a frame rate, resolution, and temporal perceptual information TI of a VR video, where the TI of the VR video is used to represent a time variation of a video sequence of the VR video; and
a determining unit 302, configured to determine a mean opinion score MOS of the VR video based on the bit rate, the frame rate, the resolution, and the TI of the VR video, where the MOS of the VR video is used to represent quality of the VR video.

In a feasible embodiment, when obtaining the TI of the VR video, the obtaining unit 301 is specifically configured to:

obtain a difference between pixel values at a same location in two adjacent frames of images of the VR video; and calculate the difference between the pixel values at the same location in the two adjacent frames of images based on standard deviation formulas, to obtain the TI of the VR video. $W\ i{=}W,j{=}H$

$$TI = \sqrt{\sum_{i=1,j=1}^{i=W,j=H}(p_{ij}-p)^2 \,/(W*H)}$$

The standard deviation formulas are , and $\qquad p = \sum_{i=1,j=1}^{i=W,j=H} p_{ij}\,/(W*H)$ , where

$p_{ij}$ represents a difference between a pixel value of a $j^{th}$ pixel in an $i^{th}$ row of a current frame in the two adjacent frames of images and a pixel value of a $j^{th}$ pixel in an $i^{th}$ row of a previous frame of the current frame, and W and H respectively represent a width and a height of each of the two adjacent frames of images.

In a feasible embodiment, when obtaining the TI of the VR video, the obtaining unit 301 is specifically configured to:

obtain a head rotation angle $\Delta a$ of a user within preset duration $\Delta t$; determine an average head rotation angle of the user based on the preset duration $\Delta t$ and the head rotation angle $\Delta a$ of the user; and determine the TI of the VR video based on the average head rotation angle of the user. A larger average head rotation angle of the user indicates a larger TI value of the VR video.

In a feasible embodiment, when obtaining the head rotation angle $\Delta a$ of the user within the preset duration $\Delta t$, the obtaining unit 301 is specifically configured to:

obtain a head angle $y_t$ of the user at a time point $t$ and a head angle $y_{t+\Delta t}$ of the user at a time point $t+\Delta t$; and determine the head rotation angle $\Delta a$ of the user according to the following method: When an absolute value of a difference between $y_{t+\Delta t}$ and $y_t$ is greater than 180 degrees, and $y_t$ is less than $y_{t+\Delta t}$,

$$\Delta a = 180 - abs(y_t) + 180 - abs(y_{t+\Delta t})_;$$

when the absolute value of the difference between $y_{t+\Delta t}$ and $y_t$ is greater than 180 degrees, and $y_t$ is greater than $y_{t+\Delta t}$,

$$\Delta a = (180 - abs(y_t) + 180 - abs(y_{t+\Delta t})) - 1_;$$

and when the absolute value of the difference between $y_{t+\Delta t}$ and $y_t$ is not greater than 180 degrees, $\Delta a = y_{t+\Delta t} - y_t$.

In a feasible embodiment, when determining the TI of the VR video based on the average head rotation angle of the user, the obtaining unit 301 is specifically configured to:

input the average head rotation angle of the user into a first TI prediction model for calculation, to obtain the TI of the VR video. The first TI prediction model is $TI=\log(m*angleVelocity)+n$, where $angleVelocity$ represents the average head rotation angle of the user, and m and n are constants.

In a feasible embodiment, when determining the TI of the VR video based on the average head rotation angle of the user, the obtaining unit 301 is specifically configured to:

input the average head rotation angle of the user into a second TI prediction model for calculation, to obtain the TI of the VR video. The second TI prediction model is a nonparametric model.

In a feasible embodiment, when determining the mean opinion score MOS of the VR video based on the bit rate, the frame rate, the resolution, and the TI of the VR video, the determining unit 302 is specifically configured to:

input the bit rate, the resolution, the frame rate, and the TI of the VR video into a quality assessment model for calculation, to obtain the MOS of the VR video. The quality assessment model is as follows:

$$MOS = 5 - a*\log(\max(\log(B1),0.01)) - b*\log(\max(\log(B2),0.01)) - c*\log(\max(\log F,0.01)) -$$

$$d*\log(\max(\log(TI),0.01))_, \text{ where}$$

where B1 represents the bit rate of the VR video, B2 represents the resolution of the VR video, F represents the frame rate of the VR video, and a, b, c, and d are constants.

It should be noted that the units (the obtaining unit 301 and the determining unit 302) are configured to perform related steps of the foregoing method. The obtaining unit 301 is specifically configured to perform related content of step S201, and the determining unit 302 is specifically configured to perform related content of step S202.

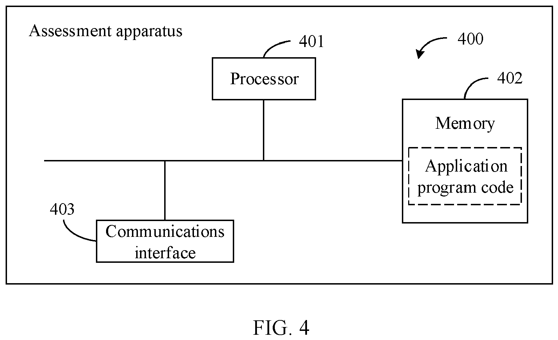

In this embodiment, the assessment apparatus 300 is presented in a form of a unit. The "unit" herein may be an application-specific integrated circuit (application-specific integrated circuit, ASIC), a processor or a memory that executes one or more software or firmware programs, an integrated logic circuit, and/or another device that can provide the foregoing function. In addition, the obtaining unit 301 and the determining unit 302 may be implemented by using a processor 401 of an assessment apparatus shown in FIG. 4.

As shown in FIG. 4, an assessment apparatus 400 may be implemented in a structure shown in FIG. 4. The assessment apparatus 400 includes at least one processor 401, at least one memory 402, and at least one communications interface 403. The processor 401, the memory 402, and the communications interface 403 are connected and communicate with each other by using the communications bus.

The processor 401 may be a general-purpose central processing unit (CPU), a microprocessor, an application-specific integrated circuit (application-specific integrated circuit, ASIC), or one or more integrated circuits for controlling program execution of the foregoing solutions.

The communications interface 403 is configured to communicate with another device or a communications network, for example, an Ethernet, a radio access network (RAN), or a wireless local area network (Wireless Local Area Networks, WLAN).

The memory 402 may be a read-only memory (read-only memory, ROM) or another type of static storage device that can store static information and an instruction, or a random access memory (random access memory, RAM) or another type of dynamic storage device that can store information and an instruction, or may be an electrically erasable programmable read-only memory (Electrically Erasable Programmable Read-Only Memory, EEPROM), a compact disc read-only memory (Compact Disc Read-Only Memory, CD-ROM) or other compact disc storage, optical disc storage (including a compressed optical disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be accessed by a computer. However, this is not limited thereto. The memory may exist independently, and is connected to the processor by using the bus. The memory may be alternatively integrated with the processor.

The memory 402 is configured to store application program code for executing the foregoing solutions, and the processor 401 controls the execution. The processor 401 is configured to execute the application program code stored in the memory 402.

The code stored in the memory 402 may be used to perform related content of the method that is for assessing quality of a VR video and that is disclosed in the embodiment shown in FIG. 2. For example, a bit rate, a frame rate, resolution, and temporal perceptual information TI of a VR video are obtained, where the TI is used to represent a time variation of a video sequence of the VR video; and a mean opinion score MOS of the VR video is determined based on the bit rate, the frame rate, the resolution, and the TI of the VR video, where the MOS of the VR video is used to represent quality of the VR video.

The embodiments of the present invention further provide a computer storage medium. The computer storage medium may store a program, and when the program is executed, at least a part or all of the steps of any method for assessing quality of a VR video recorded in the foregoing method embodiments may be performed.

It should be noted that, to make the description brief, the foregoing method embodiments are expressed as a series of actions. However, a person skilled in the art should appreciate that the present invention is not limited to the described action sequence, because according to the present invention, some steps may be performed in other sequences or performed simultaneously. In addition, a person skilled in the art should also appreciate that all the embodiments described in the specification are example embodiments, and the related actions and modules are not necessarily mandatory to the present invention.

In the foregoing embodiments, the description of each embodiment has respective focuses. For a part that is not described in detail in an embodiment, refer to related descriptions in other embodiments.

In the several embodiments provided in this application, it should be understood that the disclosed apparatus may be implemented in another manner. For example, the described apparatus embodiment is merely an example. For example, the unit division is merely logical function division and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable memory. Based on such an understanding, the technical solutions of the present invention essentially, or the part contributing to the conventional technology, or all or some of the technical solutions may be implemented in the form of a software product. The software product is stored in a memory and includes several instructions for instructing a computer device (which may be a personal computer, a server, or a network device) to perform all or some of the steps of the methods described in the embodiments of the present invention. The foregoing memory includes: any medium that can store program code, such as a USB flash drive, a read-only memory (ROM, Read-Only Memory), a random access memory (RAM, Random Access Memory), a removable hard disk, a magnetic disk, or an optical disc.

A person of ordinary skill in the art may understand that all or some of the steps of the methods in the embodiments may be implemented by a program instructing related hardware. The program may be stored in a computer-readable memory. The memory may include a flash memory, a read-only memory (English: Read-Only Memory, ROM for short), a random access memory (English: Random Access Memory, RAM for short), a magnetic disk, an optical disc, or the like.

The embodiments of the present invention are described in detail above. The principle and implementation of the present invention are described herein through specific examples. The description about the embodiments of the present invention is merely provided to help understand the method and core ideas of the present invention. In addition, a person of ordinary skill in the art can make variations and modifications to the present invention in terms of the specific implementations and application scopes according to the ideas of the present invention. Therefore, the content of specification shall not be construed as a limit to the present invention.

**Claims**

1. A method for assessing quality of a virtual reality VR video, comprising:

    obtaining a bit rate, a frame rate, resolution, and temporal perceptual information TI of a VR video, wherein the TI of the VR video is used to represent a time variation of a video sequence of the VR video; and
    determining a mean opinion score MOS of the VR video based on the bit rate, the frame rate, the resolution, and the TI of the VR video, wherein the MOS of the VR video is used to represent quality of the VR video.

2. The method according to claim 1, wherein the obtaining TI of a VR video comprises:

    obtaining a head rotation angle $\Delta a$ of a user within preset duration $\Delta t$;
    determining an average head rotation angle of the user based on the preset duration $\Delta t$ and the head rotation angle $\Delta a$ of the user; and
    determining the TI of the VR video based on the average head rotation angle of the user, wherein a larger average head rotation angle of the user indicates a larger TI value of the VR video.

3. The method according to claim 2, wherein the obtaining a head rotation angle $\Delta a$ of a user within preset duration $\Delta t$ comprises:

    obtaining a head angle $y_t$ of the user at a time point $t$ and a head angle $y_{t+\Delta t}$ of the user at a time point $t+\Delta t$; and
    determining the head rotation angle $\Delta a$ of the user according to the following method:
    when an absolute value of a difference between $y_{t+\Delta t}$ and $y_t$ is greater than 180 degrees, and $y_t$ is less than $y_{t+\Delta t}$,

$$\Delta a = 180 - abs(y_t) + 180 - abs(y_{t+\Delta t}),$$

    when the absolute value of the difference between $y_{t+\Delta t}$ and $y_t$ is greater than 180 degrees, and $y_t$ is greater than $y_{t+\Delta t}$,

$$\Delta a = (180 - abs(y_t) + 180 - abs(y_{t+\Delta t})) - 1$$

and

when the absolute value of the difference between $y_{t+\Delta t}$ and $y_t$ is not greater than 180 degrees, $\Delta a = y_{t+\Delta t} - y_t$.

**4.** The method according to claim 2 or 3, wherein the determining the TI of the VR video based on the average head rotation angle of the user comprises:

inputting the average head rotation angle of the user into a first TI prediction model for calculation, to obtain the TI of the VR video, wherein
the first TI prediction model is *TI*=log(*m*angleVelocity*)+n*; and
*angleVelocity* represents the average head rotation angle of the user, and m and n are constants.

**5.** The method according to claim 2 or 3, wherein the determining the TI of the VR video based on the average head rotation angle of the user comprises:

inputting the average head rotation angle of the user into a second TI prediction model for calculation, to obtain the TI of the VR video, wherein
the second TI prediction model is a nonparametric model.

**6.** The method according to any one of claims 1 to 5, wherein the determining a mean opinion score MOS of the VR video based on the bit rate, the frame rate, the resolution, and the TI of the VR video comprises:

inputting the bit rate, the resolution, the frame rate, and the TI of the VR video into a quality assessment model for calculation, to obtain the MOS of the VR video, wherein
the quality assessment model is as follows:

$$MOS = 5 - a * \log(\max(\log(B1), 0.01)) - b * \log(\max(\log(B2), 0.01)) - c * \log(\max(\log F, 0.01)) -$$

$$d * \log(\max(\log(TI), 0.01)), \text{ wherein}$$

wherein
B1 represents the bit rate of the VR video, B2 represents the resolution of the VR video, F represents the frame rate of the VR video, and a, b, c, and d are constants.

**7.** An assessment apparatus, comprising:

an obtaining unit, configured to obtain a bit rate, a frame rate, resolution, and temporal perceptual information TI of a virtual reality VR video, wherein the TI of the VR video is used to represent a time variation of a video sequence of the VR video; and
a determining unit, configured to determine a mean opinion score MOS of the VR video based on the bit rate, the frame rate, the resolution, and the TI of the VR video, wherein the MOS of the VR video is used to represent quality of the VR video.

**8.** The apparatus according to claim 7, wherein in an aspect of obtaining the TI of the VR video, the obtaining unit is specifically configured to:

obtain a head rotation angle $\Delta a$ of a user within preset duration $\Delta t$;
determine an average head rotation angle of the user based on the preset duration $\Delta t$ and the head rotation angle $\Delta a$ of the user; and
determine the TI of the VR video based on the average head rotation angle of the user, wherein a larger average head rotation angle of the user indicates a larger TI value of the VR video.

**9.** The apparatus according to claim 8, wherein in an aspect of obtaining the head rotation angle $\Delta a$ of the user within the preset duration $\Delta t$, the obtaining unit is specifically configured to:

obtain a head angle $y_t$ of the user at a time point $t$ and a head angle $y_{t+\Delta t}$ of the user at a time point $t+\Delta t$; and
determine the head rotation angle $\Delta a$ of the user according to the following method:
when an absolute value of a difference between $y_{t+\Delta t}$ and $y_t$ is greater than 180 degrees, and $y_t$ is less than $y_{t+\Delta t}$,

$$\Delta a = 180 - abs(y_t) + 180 - abs(y_{t+\Delta t});$$

when the absolute value of the difference between $y_{t+\Delta t}$ and $y_t$ is greater than 180 degrees, and $y_t$ is greater than $y_{t+\Delta t}$,

$$\Delta a = (180 - abs(y_t) + 180 - abs(y_{t+\Delta t})) - 1;$$

and
when the absolute value of the difference between $y_{t+\Delta t}$ and $y_t$ is not greater than 180 degrees, $\Delta a = y_{t+\Delta t} - y_t$.

10. The apparatus according to claim 8 or 9, wherein in an aspect of determining the TI of the VR video based on the average head rotation angle of the user, the obtaining unit is specifically configured to:

   input the average head rotation angle of the user into a first TI prediction model for calculation, to obtain the TI of the VR video, wherein
   the first TI prediction model is $TI = \log(m*angleVelocity) + n$; and
   $angleVelocity$ represents the average head rotation angle of the user, and m and n are constants.

11. The apparatus according to claim 8 or 9, wherein in an aspect of determining the TI of the VR video based on the average head rotation angle of the user, the obtaining unit is specifically configured to:

   input the average head rotation angle of the user into a second TI prediction model for calculation, to obtain the TI of the VR video, wherein
   the second TI prediction model is a nonparametric model.

12. The apparatus according to any one of claims 7 to 11, wherein in an aspect of determining the mean opinion score MOS of the VR video based on the bit rate, the frame rate, the resolution, and the TI of the VR video, the determining unit is specifically configured to:

   input the bit rate, the resolution, the frame rate, and the TI of the VR video into a quality assessment model for calculation, to obtain the MOS of the VR video, wherein
   the quality assessment model is as follows:

$$MOS = 5 - a*\log(\max(\log(B1),0.01)) - b*\log(\max(\log(B2),0.01)) - c*\log(\max(\log F,0.01)) - $$

$$d*\log(\max(\log(TI),0.01)), \text{ wherein}$$

   wherein
   B1 represents the bit rate of the VR video, B2 represents the resolution of the VR video, F represents the frame rate of the VR video, and a, b, c, and d are constants.

13. An assessment apparatus, comprising:

   a memory that stores executable program code; and
   a processor coupled to the memory, wherein
   the processor invokes the executable program code stored in the memory, to perform the method according to any one of claims 1 to 6.

14. A computer-readable storage medium, wherein the computer storage medium stores a computer program, the computer program comprises program instructions, and when the program instructions are executed by a processor, the processor is enabled to perform the method according to any one of claims 1 to 6.

101

Video server

102

Intermediate
network device

103

Terminal device

FIG. 1

S201

An assessment apparatus obtains a bit rate, resolution, a frame
rate, and TI of a VR video

S202

The assessment apparatus determines a MOS of the VR video
based on the bit rate, the resolution, the frame rate, and the TI of
the VR video

FIG. 2

Assessment apparatus

301

Obtaining unit

302

Determining unit

FIG. 3

Assessment apparatus

Processor — 401

— 400

— 402

Memory

Application program code

403 — Communications interface

FIG. 4

## INTERNATIONAL SEARCH REPORT

| | International application No. |
|---|---|
| | **PCT/CN2020/090724** |

**A. CLASSIFICATION OF SUBJECT MATTER**

H04N 17/00(2006.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI, EPODOC, WPI, IEEE: 虚拟现实, VR, 评估, 码率, 分辨率, 帧率, 时间, 相邻帧, 像素, 变化, 质量, 头, 转动, 角, 模型, virtual reality, assessment, bit rate, resolution, frame rate, time, adjacent, frame, pixel, variation, quality, head, roatation, angle, model

**C. DOCUMENTS CONSIDERED TO BE RELEVANT**

| Category* | Citation of document, with indication, where appropriate, of the relevant passages | Relevant to claim No. |
|---|---|---|
| X | CN 103780901 B (SHANGHAI JIAO TONG UNIVERSITY) 19 August 2015 (2015-08-19) description paragraphs 9, 10, 17 | 1, 7, 13, 14 |
| Y | CN 103780901 B (SHANGHAI JIAO TONG UNIVERSITY) 19 August 2015 (2015-08-19) description paragraphs 9, 10, 17 | 2, 8 |
| Y | CN 106547352 A (PIMAX TECHNOLOGY (SHANGHAI) CO., LTD.) 29 March 2017 (2017-03-29) description, paragraphs 45 and 48 | 2, 8 |
| X | CN 109451303 A (HEFEI UNIVERSITY OF TECHNOLOGY) 08 March 2019 (2019-03-08) description, paragraphs 10-19 | 1, 7, 13, 14 |
| Y | CN 109451303 A (HEFEI UNIVERSITY OF TECHNOLOGY) 08 March 2019 (2019-03-08) description paragraphs 10-19, 45-87 | 2, 8 |
| A | GB 2560156 A (SONY INTERACTIVE ENTERTAINMENT INC.) 05 September 2018 (2018-09-05) entire document | 1-14 |
| A | CN 104883563 A (HUAWEI TECHNOLOGIES CO., LTD.) 02 September 2015 (2015-09-02) entire document | 1-14 |

☑ Further documents are listed in the continuation of Box C.     ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 July 2020** | **30 July 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/090724** |

**C.    DOCUMENTS CONSIDERED TO BE RELEVANT**

| Category* | Citation of document, with indication, where appropriate, of the relevant passages | Relevant to claim No. |
|---|---|---|
| A | CN 107483920 A (BEIJING INSTITUTE OF TECHNOLOGY) 15 December 2017 (2017-12-15)<br>        entire document | 1-14 |

Form PCT/ISA/210 (second sheet) (January 2015)

INTERNATIONAL SEARCH REPORT
Information on patent family members

International application No.

**PCT/CN2020/090724**

| Patent document cited in search report | | | Publication date (day/month/year) | Patent family member(s) | | | Publication date (day/month/year) |
|---|---|---|---|---|---|---|---|
| CN | 103780901 | B | 19 August 2015 | CN | 103780901 | A | 07 May 2014 |
| CN | 106547352 | A | 29 March 2017 | | None | | |
| CN | 109451303 | A | 08 March 2019 | CN | 109451303 | B | 08 November 2019 |
| GB | 2560156 | A | 05 September 2018 | GB | 201702584 | D0 | 05 April 2017 |
| CN | 104883563 | A | 02 September 2015 | EP | 2648415 | A4 | 05 March 2014 |
| | | | | JP | 5745098 | B2 | 08 July 2015 |
| | | | | EP | 2663088 | A3 | 05 March 2014 |
| | | | | KR | 101464456 | B1 | 21 November 2014 |
| | | | | EP | 2663088 | A2 | 13 November 2013 |
| | | | | US | 2013314553 | A1 | 28 November 2013 |
| | | | | KR | 20130110213 | A | 08 October 2013 |
| | | | | EP | 2648415 | B1 | 18 January 2017 |
| | | | | JP | 2014064271 | A | 10 April 2014 |
| | | | | CN | 102740108 | B | 08 July 2015 |
| | | | | CN | 102740108 | A | 17 October 2012 |
| | | | | KR | 20130112056 | A | 11 October 2013 |
| | | | | US | 9319670 | B2 | 19 April 2016 |
| | | | | JP | 5938786 | B2 | 22 June 2016 |
| | | | | JP | 2014509128 | A | 10 April 2014 |
| | | | | WO | 2012139467 | A1 | 18 October 2012 |
| | | | | EP | 2648415 | A1 | 09 October 2013 |
| | | | | CN | 104883563 | B | 12 April 2017 |
| | | | | KR | 101465927 | B1 | 26 November 2014 |
| CN | 107483920 | A | 15 December 2017 | CN | 107483920 | B | 21 December 2018 |

Form PCT/ISA/210 (patent family annex) (January 2015)